# EUROPEAN PATENT SPECIFICATION

(11) **EP 1 427 653 B1**
(45) Date of publication and mention of the grant of the patent: **14.10.2015**
(21) Application number: 02753929.5
(22) Date of filing: 17.08.2002
(51) Int. Cl.: B65D 85/38, B65D 75/30, G02C 7/04, A45C 11/00

(54) **PACKAGING FOR DISPOSABLE SOFT CONTACT LENSES**
VERPACKUNG FÜR WEICHE WEGWERF-KONTAKTLINSEN
EMBALLAGE POUR LENTILLES DE CONTACT SOUPLES JETABLES

(30) Priority: 17.08.2001 AU PR708601
(43) Date of publication of application: 16.06.2004
(60) Divisional application: 11171593.4
(73) Proprietor: Menicon Singapore Pte Ltd., Singapore 609925 (SG)
(72) Inventor: NEWMAN, Stephen Donald, Bayshore Park (SG)
(74) Representative: WP Thompson
(86) International application number: PCT/AU2002/001105
(87) International publication number: WO 2003/016175

(56) References cited:
- EP-A- 1 092 645
- EP-A1- 1 033 326
- WO-A-92/00151
- US-A- 3 369 656
- US-A- 5 697 495
- US-A- 5 853 085
- US-A1- 2002 029 984

## Description

### BACKGROUND

The present invention relates to a disposable contact lens package and to methods of producing disposable contact lens packages. It relates to an improved economic form of package for a contact lens which satisfies lens packaging criteria including sterility and environmentally sensitive disposability.

### PRIOR ART

Soft disposable contact lenses are commonly contained in disposable packages. As packaging adds to the overall cost of the lens it should be made as economically as possible but without compromise to the requisite packaging criteria. The traditional packaging for disposable lenses (both two weekly and daily) consists of a polypropylene "boat" or receptacle for the lens, topped by a multi-layer film of polyethylene, Aluminium, bonding agent and Polypropylene. The boat is Riled with a suitable storage solution preferably saline and receives the lens in situ. The "boat" or blister pack is then autoclaved using steam and pressure to terminal sterility. These blister packs are presented to the patient in boxes of individual or as multiple blister strips. The marketing objective is to be able to present the contact lens to a patient in an aesthetically pleasing package that both satisfies the statutory requirements for sterility and stability and allows the patient to remove the lens safely and easily. The packaging is used only once and is discarded after the lens is removed. This impacts on the costs of lens/package combination. In order to reduce the overall price of the lens to the patient, the cost of the packaging should be kept to an absolute minimum. Disposability of lens packages places an onus on conformity to the required ecological requirements. The packages should present the least problematic ecological threat as is possible. The above packages are known generically as blister packs and generally hold a single contact lens. The packs typically consist of two pieces the first being the moulded or preformed blister pack ( sometimes referred to as a boat) and a cover. The boat is usually an injection moulded plastics which has high stiffness but is capable of limited elastic deflection and includes a preformed recess in which the contact lens is placed. The cover is typically a laminated material comprising mostly Aluminum and polypropylene. The package must be well sealed and should minimize gas transmission through the "boat" and laminated layer to maximize the shelf life and prevent drying out of the lens contained in the package. The lens must be kept hydrated whilst in the package. In use, the user removes the laminated material from a flange formed on the "boat" by peeling back to expose the lens immersed in a hydrating solution. A variety of contact lens packages and particularly disposable contact lens packages including preformed blister packs are taught in the prior art.

One example of a known contact lens packaging is disclosed in United States patent 5,704,468. That patent teaches a packaging arrangement for the containment in a blister pack of a hydrophilic contact lens in a sterile aqueous solution. The packaging includes a form of stiffening groove or wall elements in flanges of base members of the blister packages housing to facilitate an improved attachment between the base members of the blister package housing the lens and a flexible cover sheet utilized for sealing engagement with the base members while incorporating additional strength to the blister package structures.

United States patent 4,392,569 discloses an asepticizing case for the storage and transport of soft contact lenses wherein each lens is confined on a curved surface in a fluid environment without the direct application of force thereto. The case includes a flexible skirt of having a smaller radius of curvature than that of the lens receiving surface is affixed to the cap to insure the positioning of each lens. Another packaging arrangement for a hydrophilic contact lens is disclosed in United States patent 5,620,088. The packaging arrangement disclosed houses a contact lens in a sterile aqueous solution. More specifically the arrangement discloses a plurality of disposable hydrophilic contact lenses in a specific number of individual packaging arrangements collectively housed in a box like container so as to provide a specified or essentially measured supply of contact lenses for use by a consumer over a predetermined period of time.

A further packaging for holding a contact lens is disclosed in United States patent 4,691,820 which describes a moulded blister package for storing and dispensing a hydrophilic contact lens. The package comprises a base portion which includes a cavity surrounded by an outstanding flange and a cover sheet sealed to the flange to enclose the cavity. A portion of the side wall of the cavity is inclined to form a ramp to the flange. The cover sheet may be stripped from the flange to expose the cavity and inclined side wall whereupon the lens is readily removed by sliding up and out of the cavity along the inclined surface.

Another packaging arrangement is disclosed in United States patent 5,823,327 which describes a base member for a blister package for the containment of a contact lens and which includes a planar flange extending outwardly about a cavity for housing the contact lens. A proximate peripheral edge of the flange includes a continuous groove into which there is pressed the material of a flexible cover sheet of the blister package so as to clampingly engage the base member.

Flexible retort packages are also known, but not in use with contact lenses. One such package is disclosed in United States patent 4,769,261 . That patent teaches a seal layer for use in large institutional sized retort pouches comprising an ABA film structure wherein the A layers are each composed of a blend of a minor amount of an elastomer and a major amount of a polyolefin and the B layer is composed of a blend of a major amount of an elastomer and a minor amount of polyolefin. Retort pouches made with the ABA film structure as the seal layer exhibit improved impact strength. Conventional wisdom in the contact lens industry has been to provide preformed stiff packaging which protects the lens from external impact damage from applied loads.

United States Patent 5853085 discloses a disposable holding and cleaning apparatus for a contact lens and which includes an open end for holding one or more contact lenses. The envelope is divided by a horizontal seam and vertical seam in order to form a pair of lens storage compartments and fluid storage compartments. Several ports are includes in the package to facilitate communication between the fluid and the lens storage compartments. When manual pressure is exerted on the balloon the balloon bursts and disperses lens cleaning solution onto the lens storage compartments through the ports for cleaning the lenses. This arrangement enables holding of contact lenses and lens care solution in air tight condition and prevents accidental loss of the contact lens. The packaging arrangements for holding contact lenses disclosed in that patent is intended as a cleaning method for contact lenses rather than a flexible mass produced economic package for holding and transporting lenses. A disadvantage of this lens package in United States Patent 5853085 is that it is expensive to manufacture and is complex in construction.

Other examples of contact lens packages are disclosed in European Patents EP 1 092 645 A1 to Johnson and Johnson and EP 0 129 388 to Ruxley Holdings Limited. EP 1 092 645 discloses a disposable package for a contact lens which employs an injection moulded blister pack sealed by a laminated layer of plastics and aluminum foil. That patent discloses an example of the well known blister packages which includes a magnifying lens to enable a user to read lens indicia. The package disclosed is potentially resealable and there is no teaching in this patent of a retort style package for a contact lens.

EP 0 129 388 also discloses a package specifically for measurement of one or more optical parameters of a contact lens wherein the lens is housed on an "optically acceptable" plastics film containing and aqueous fluid and a contact lens.

US 3,369,656 A discloses a package according to the preamble of claim 1.

EP 1 033 326 A discloses medical device sterilization processes including autoclave sterilization suitable for contact lenses.

The known contact lens packages have a number of disadvantages which include the following:
1. The packages are relatively expensive for daily disposable packages as they use two types of material one of which is preformed increasing manufacturing costs. Consumers resist packages which contribute to increased cost of a lens. This will become even more of a problem as the daily disposable market grows and becomes more competitive.
2. Prior art packages are traditionally manufactured from two distinctly different materials which are used to make up a blister which houses the lens. This can lead to sealing problems with an attendant risk of compromised sterility. Over time, a poor sealing blister pack can allow its contents to evaporate and render the pack useless. This could cause stock defects and consequent financial losses to the manufactured. Correction of the defects would be potentially expensive.
3. Should the patient receive a non sterile lens due to poor or incomplete package sealing, there could be the possibility of that patient being subjected to an eye infection with the risk of ocular compromise and resultant litigation.
4. The size of the packaging is a disadvantage to the disposable lens concept as the receptacle is many times larger than the lens itself. As a result of the polypropylene blister component the individual component is somewhat deeper than the lens from a sagittal perspective and as such does not lend itself to a disposable look nor convenient stacking due to its bulk. If the consumer travels, the lenses can prove to be quite a bulky item.
5. The traditional approach to lens packaging has been to ensure that the original shape of the lens is maintained in the package. This philosophical approach places limitations on package configurations.

There is a long felt want in the disposable contact lens industry to provide an economic, space efficient and convenient disposable contact lens package without compromise to durability, sterility and utility of the lens.

### SUMMARY OF THY INVENTION

The present invention seeks to ameliorate the problems of the prior art packages by providing an alternative and more economic package but without compromise to the statutory and medical requirements of contact lens packages.

Conventional wisdom requires a disposable contact lens package to be stiff and preformed with a profiled recess to house the lens therein. The preformed recess in the known packages is intended to ensure that the lens shape is maintained and is not deformed by the package. Retort style packaging on the other hand is contrary to conventional wisdom as it is flexible and not preformed and can contribute to adjustments to the shape of the lens in the package.. The present invention challenges the long held view that disposable lens packages must be stiff and for the most part rigid and capable of elastic deflection under load. Stiffness of the package was previously thought essential to protect the lens. If wall stiffness is abandoned as an essential packaging criteria this opens alternative storage possibilities for contact lens packages with significant space economy.

The present invention according to one embodiment, offers an alternative solution for packaging of disposable contact lenses by employing a packaging material which provides the requisite maintenance of hydration and protection for a lens therein and which may be stacked flat for optimum space economy. According to one embodiment, the lens package is manufactured from one piece of the package material. The package preferably consists of identical but flexible materials approved by the various contact lens regulatory authorities around the world whilst remaining simple in construction.

According to one aspect of the present invention there is provided a disposable contact lens package comprising: a first flexible layer; a second flexible layer; a contact lens sealed between said first layer and said second layer; a storage solution sealed between said first flexible layer and said second flexible layer, wherein said storage solution contacts said contact lens; characterized in that said contact lens is a newly manufactured soft lens; and wherein said package containing said contact lens is a retort package configured to be autoclaved. Both said first and second layers are substantially flat or planar. The layers are sealed to define a space in which the contact lens is held.

One of the layers may comprise aluminium and/or may be a multi-layer laminate, which may comprise one or more materials selected from the group consisting of polyethylene terepthelate, polypropylene, and aluminium.

The storage solution may be a hydration medium.

The package when sealed may be flexible to allow it to be deformed.

The first and second layers may be peelably separated to release the lens.

The first and second layers may comprise a single sheet of flexible material folded to provide a space in which the lens is held.

The package preferably comprises an absence of air in the package. The lens may be free to move inside the space defined by the opposing inner surfaces and edges of the space.

The package may comprise a second package having a first flexible layer, a second flexible layer coupled to said first layer, a newly manufactured contact lens hermetically sealed between said first layer and said second layer, a storage solution sealed between said first flexible layer and said second flexible layer, wherein said storage solution contacts said contact lens, said package containing said contact lens is a retort package configured to be autoclaved; wherein said package and said second package are connected via a frangible connection.

According to a second aspect of the invention a method is provided of producing the contact lens package of the first aspect, the package being formed by folding a single sheet of material over itself to provide the first and second flexible layers.

According to a third aspect of the invention a method of producing the contact lens package of the first aspect comprises heat sealing two opposing pieces of flexible material along their edges.

Preferably it is a single use contact lens package.

There may also be means for enabling release of said contact lens from said package such as peeling away one of said barrier layers from the other layer. The layers are preferably not preformed.

In one example the barrier layers may be capable of mutual deformation responsive to a load applied to the package. The layers may be formed from two pieces which provide two opposing inner surfaces which define said space in which said lens is held. The hydration maintenance medium also provides a buffer to dissipate energy generated by external loads applied to the package at or near the location of the lens. The lens hydration maintenance medium is a suitable storage solution which may be, but not limited to, a saline based solution. Each layer or barrier wall of the package may be laminated and include a metallic layer such as aluminium. Each layer may further comprise an outer layer of protective material and an inner layer of polypropolyene which engages an outer surface of the metallicised layer. The polypropylene layer may engage an inner surface of the metallicised layer.

According to another example at least one package is detachably connected to other like packages such that a set of at least two like packages are formed wherein each package is connected to an adjacent package via a frangible connection.

An additional package may be connected to a contact lens package and includes therein a source of lens hydration maintenance medium.

The barrier layers of the package may be formed from the same or different materials.

In one example a method of producing a disposable contact lens package comprises the steps of:
a) taking a single sheet of pliable material;
b) placing a lens on a surface of the sheet;
c) dosing the surface of the material with a predetermined hydration medium;
d) folding said material back on itself to define a space in which me contact lens is-held;
e) sealing said-envelope so that said contact lens is held in a sealed environment;
f) allowing access to said lens by splitting or dividing said package along at least one edge.

The barrier material is pliable allowing the package to be deformed, flattened, twisted, bent folded or rolled in unison with the lens and without compromise to the integrity of the lens therein.

Another example comprises: a set of single use retort packages for holding contact lenses therein; the packages each comprising at least one barrier layer of flexible/pliable package material forming at least first and second opposing surfaces which define an internal package space in which the contact lens is retained; a medium in the space for maintaining lens hydration; and means for enabling release of said contact lens from said package; wherein the at least one barrier layer of material is capable of assuming a generally planar configuration and is not preformed; wherein the set is formed by joining at least two said packages end to end so that a single package may be torn away from an adjacent package via a frangible connection between the packages.

Another example comprises: a strip of joined single use retort packages for holding a contact lens; wherein each single use package is connected to an adjacent package via a frangible connection.

Another example comprises:
a kit of joined single use pliable retort packages for each holding a contact lens;
wherein each single use package is connected to at least one adjacent package.

Another example comprises:
a single use package capable of holding a contact lens therein, the packaging comprising:
   at least one barrier layer of flexible/pliable package material forming at least first and second opposing surfaces which define an internal package space in which the contact lens is retained;
   a medium in the space for maintaining lens hydration; and
   means for enabling release of said contact lens from said package; wherein said at least one barrier layer of material is capable of assuming a generally co planar configuration and is/are not preformed.

### DETAILED DESCRIPTION

The present invention will now be described according to a preferred, but non limiting embodiment and with reference to the accompanying illustrations: wherein;
Figure 1 shows a plan view of a typical prior art disposable blister contact lens package.
Figure 2 shows a side elevation of the package of figure 1 with lid peeled away to release the contact lens therein.
Figure 3 shows a perspective view of the package of figure 2.
Figure 4 shows a stacking arrangement for two identical prior art contact lens packages according to one embodiment.
Figure 5 shows a plurality of blister packs stacked as in figure 4 and contained in a carton.
Figure 6 shows a perspective view of a retort package according to a preferred embodiment of the invention.
Figure 7 shows the retort package of figure 6 with the contact lens exposed by peeling a layer.
Figure 8 shows a strip of retort packages .
Figure 9 shows the strip of retort packages of figure 8 including a hydrating solution pack.
Figure 10 shows a carton containing a large number of envelopes holding retort package strips according to a preferred embodiment.

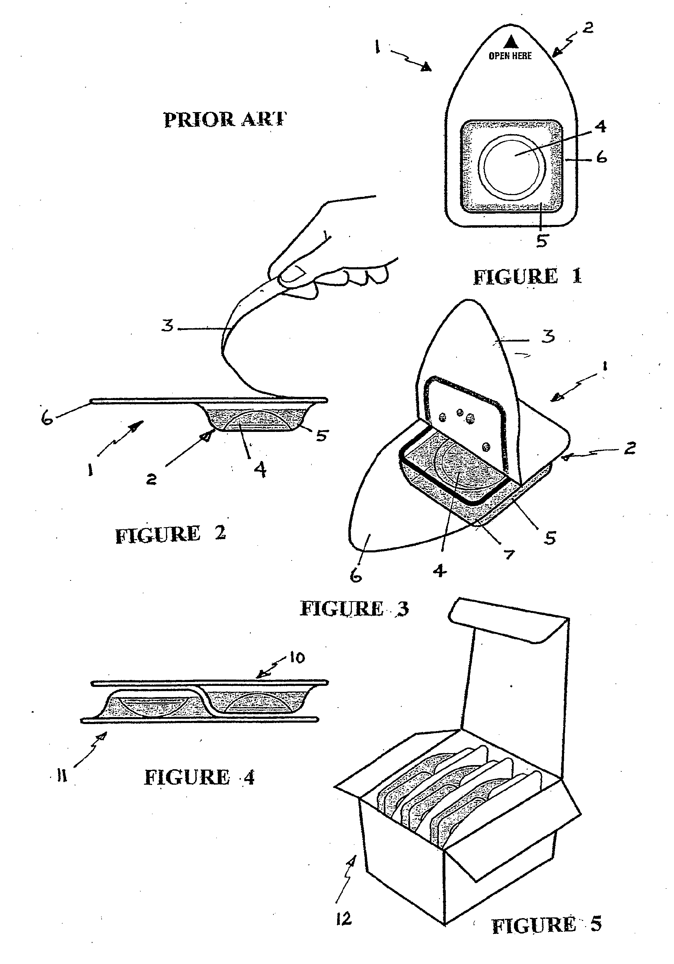

Throughout the specification the term homogenous should be taken to be a reference to a package wall formed from a single layer (i.e.. non laminated layer) of the same material. The package described may also be made from a multi layer laminated material which may be formed from a combination of suitable plastics or a combination of suitable plastics and a metallic layer as described herein. Referring to figure 1 there is shown a plan view of a typical prior art disposable blister contact lens package 1 which is formed in two parts. Figure 2 shows a side elevation of the package 1 of figure 1. Package 1 comprises a blister pack 2 which is sealed by a membrane 3 forming a lid on pack 1 and which may be peeled away to release contact lens 4 therein. Figure 3 shows a perspective view of the package of figure 2 with membrane 2 peeled away to expose contact lens 4. Typically member 2 will be a preformed blister pack and includes a profiled recess 5 which in whole or in part either conforms to the shape of a lens or provides a recess in which a lens may be placed. The injection moulded pre formation makes this is an expensive package to manufacture with the result that the lens will inevitably be more expensive for the consumer. Member 2 is typically injection moulded and the package is completed with sealing membrane 3 which mates with flange 6 to effect a sterile seal. Lens 4 is immersed in a solution 7 which maintains lens hydration keeps the lens hydrated until it is removed from the pack.

Figure 4 shows a stacking arrangement according to one embodiment for two identical prior art contact lens packages 10 and 11. It can be seen from figure 4 that although two packs conveniently interfit they take up a thickness greater than the thickness ( or depth ) of two packs. ideally a lens package should take up as little space as possible considering the relatively small size of a contact lens. Economy of storage space is a critical issue where lenses are mass produced. The exiting blister packs take up a disproportionate amount of space relative to the size of the lens leading to increased handling and storage costs. Figure 5 shows a plurality of like blister packs 12 stacked as in figure 4 and retained in a carton 13. This space taking, inconvenient and materials intensive form of lens packaging exists as a result of the conventional wisdom suggesting that lenses cannot be stacked other than in rigid containers which isolate the lens from external load.

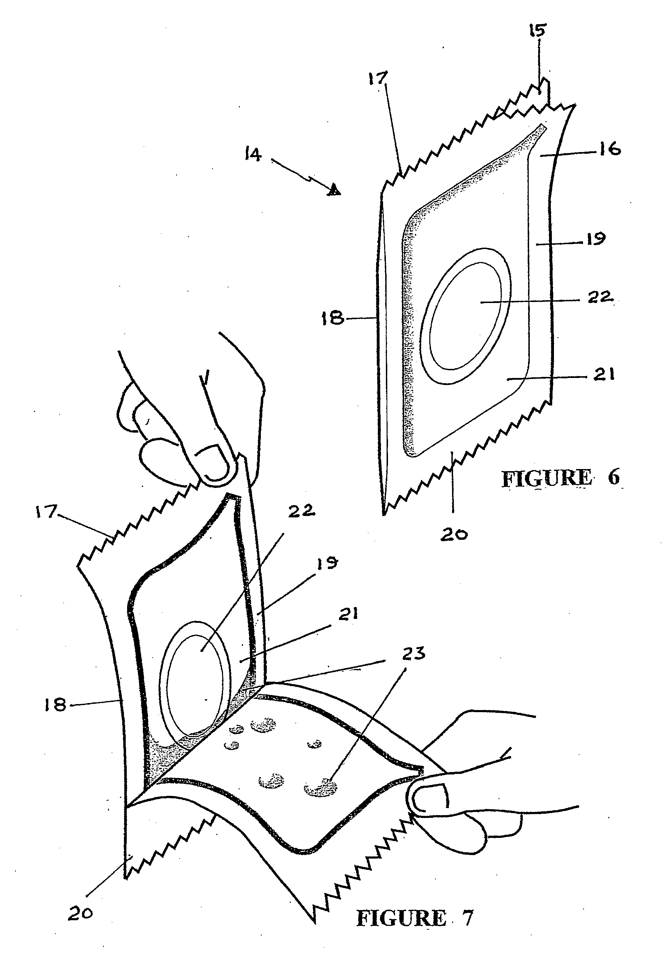

Referring to figure 6 there is shown a perspective view of a retort package 14 according to one embodiment of the invention. Package 14 comprises a layered flexible envelope for holding a lens and which may be formed from one piece or two pieces of like or different flexible material. According to one embodiment package 14 is manufactured from a single piece of a flexible laminated material which is strong enough to protect a lens held in a space formed in the package but flexible enough to withstand a variety of applied loads such as but not limited to, bending, folding, twisting, rolling or crushing. The wall of the package which is preferably a homogenous material does not necessarily conform to the shape of a lens but rather the lens "floats" in the package. The package may be formed by folding a homogenous material back on itself and sealing the edges to form a sterile envelope. Alternatively, the package may be formed from a homogenous material from two opposing pieces heat sealed along their edges in opposing relationship. Access to the lens is gained by dividing the package along one or more predetermined heat sealed edges. Referring to figure 6, package 14 comprises first and second barrier layers 15 and 16 which may be formed by folding one layer or by joining two separate barrier layers. Barrier layers 15 and 16 are heat sealed around edges 17, 18, 19 and 20. The heat sealing of edges 17 - 20 provide a boundary defining an internal space 21 in which a lens 22 is housed. Lens 22 is immersed in a predetermined minimum amount of solution 23 which keeps the lens hydrated (see figure 7). To release and expose the lens, layer 16 is peeled away from layer 17. Alternatively, layer 17 may be peeled away from layer 16. To facilitate initial release of layers, a portion of the mating engagement between layers is lightly sealed preferably at a comer to enable separation of the barrier layers. Figure 7 shows the package of figure 6 torn open to release lens 22. According to one embodiment, the barrier layers 16 and 17 are multi layer laminates comprising materials which enable compliance with statutory requirements for lens packages . For example, a typical lens package material may comprise a PET (polyethylene tarepthelate) layer, an aluminium layer and a polyolefin layer such as polypropylene. A packet of a predetermined size may be formed from barrier layers of the same or different materials. According to one embodiment the package may be formed by folding a single strip of material back on itself to form the space therein for holding the lens. In another embodiment two separate strips of the same or different material in opposing engagement are heat sealed at their edges. A thin layer of Aluminium has properties such as inherent pliability and inhibition of oxygen transmission which make it a good material as part of the barrier wall composites. According to one embodiment, a lamination profile of a barrier material may comprise an outer layer of PET of 10 µ, an aluminium layer of 50 µ a polypropylene layer of 50 µ.

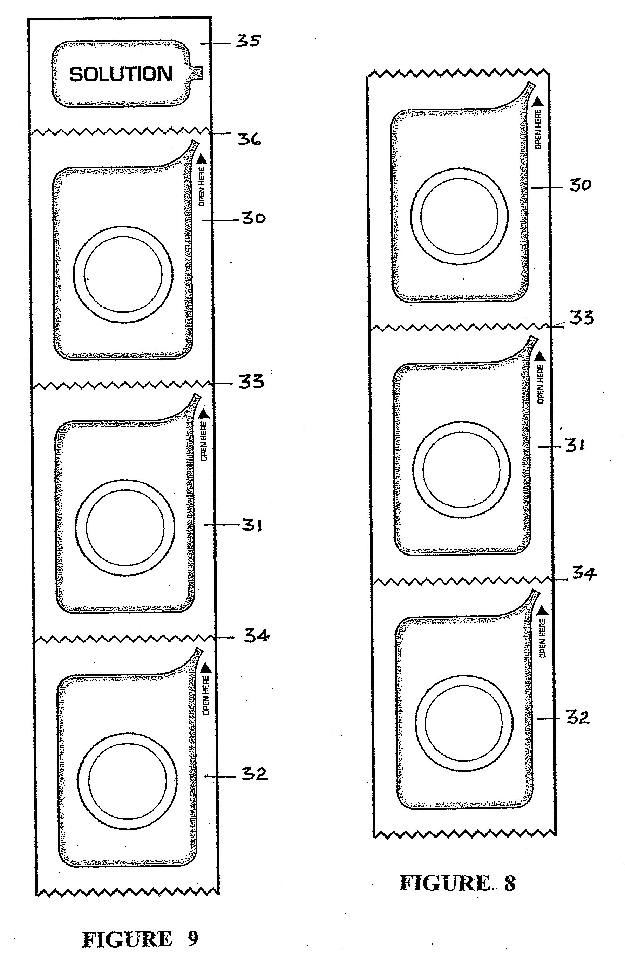

Figure 8 shows a strip of retort packages 30, 31 and 32 held together by frangible joins 33 and 34. The lens packages may be separated one at a time by tearing off at joins 33 and 34. Also, the strips may be folded about joins 33 and 34 which contributes to efficient storage and packaging. Thus 6 -8 and possibly more lenses could potentially be stored in the same space as two lenses using prior art blister packs.

Figure 9 shows the strip of retort packages 30 - 32 of figure 8 including a hydrating solution pack 35 attacked to package 30 via a frangible join 36. Pack 35 may be used by the consumer to hydrate the lens should supplementary lens hydration be required.

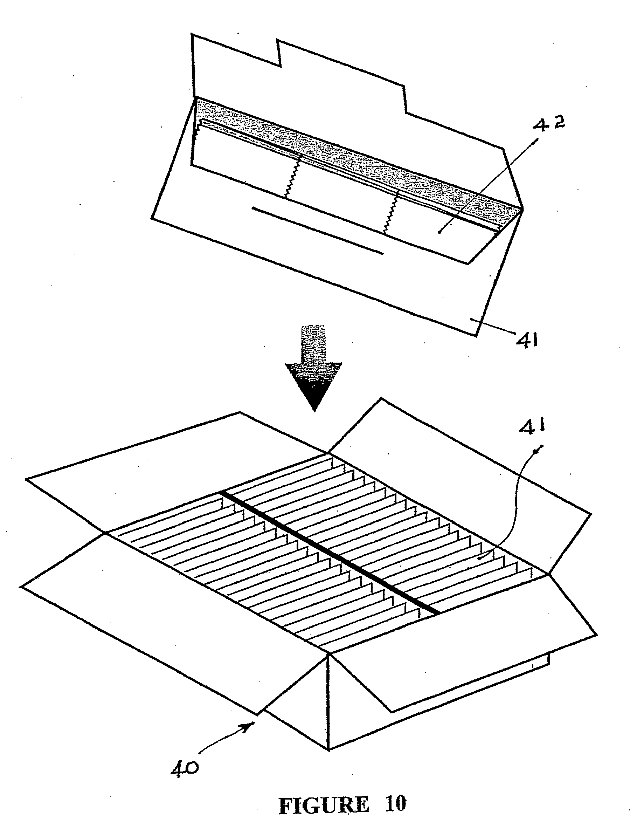

Figure 10 shows an exploded view of a carton 40 containing a large number of like envelopes 41 holding retort package strips 42 according to a preferred embodiment. It can be seen from this arrangement that a larger number of lenses may be stored per unit space compared to prior art packaging. Up to and depending upon the tightness of the packaging more than 10 lenses may be stored in a space which would previously have been taken by two lens packages.

The manufacturing of disposable lenses becomes more cost effective as the cost of packaging the lens is reduced and the efficiency of sealing and subsequent sterilising is improved. From the patient's perspective the lens can appeal more as a disposable item, takes up far less space and can be packaged in a more appealing fashion. This type of packaging especially suits daily disposable lenses as the cost component of this type of packaging is attractive to a consumer and manufacturer. The form of retort packaging described would preferably contain one soft contact lens each. The appropriate art work and statutory information may be printed on the external surfaces in a similar fashion to the current packaging.

The integrity of the lens in this "flat" style packaging is preserved by a surrounding buffer of storage medium in the packet The storage medium may also act as a safety buffer if the lens packet is subjected to rough or potentially damaging treatment. The current blister pack offers lens barrier protection through use of the injection moulded and pre formed rigid blister component. However, as the conventional blister package includes an aluminium foil bridging an opening to the blister pack, the unsupported foil offers no more protection and on the foil side potentially less protection than a retort package with two flexible barrier layers which respond more favorably to applied loads. In fact, the aluminium surface of the blister packs can be more easily punctured due to it's tightness over the polypropylene "boat". The retort style packaging is inherently soft and can deflect potential punctures by moving with the puncturing object.

According to one embodiment the solution employed for maintenance of hydration of the lens is a saline solution. The package allows for a sufficient minimum of solution for maintenance of hydration and does not require that the lens swim in hydrating solution as in the prior art packages. In the prior art blister packs, the lens 'swims' in a bath of hydration maintenance solution disposed in preformed recess.

In the package according to the invention, excess hydration maintenance fluid may be forced out during the manufacturing process leaving a predetermined minimum of solution or gel to keep the lens hydrated. Due to the optimal sealing qualities of the retort package no vapour will escape from the internal space. The flatness of the package barrier layers will facilitate sticking of the lens to one or other of the internal surfaces providing the advantage that when a layer is peeled back to expose the lens inside the lens will be stuck to an inner surface which ensures that the lens will not drop out during opening.

Advantages of the retort style packaging include the following;
1 More homogenous packaging than the known packages with the attendant improvements in sealing and subsequent sterilising
2 Smaller and slimmer ( flatter) packaging lends itself to disposability which makes it ideal for traveling.
3 The flatter pack saves weight and space due to flat storage.
4 Less packaging material per lens compared to the prior art packages.
5 More cost effective than current types of packaging thus allowing for a reduction in cost of lenses to consumers.
6 The use of a metallic foil (such as but not limited to Aluminium) foil stabilizes light and prevents unwanted O₂ transmission.
7 The package is not re useable or resealable.
8 As air is not used in the package non ballasted autoclaving is not required.
9 Absence of air in the package may contribute lens stability within the package.
10 As the package is significantly smaller and slimmer than the prior art packages batch sizes may be increased yet storage space in an end users package may be reduced.
11 Secondary packaging can be more compact and package walls/barrier layers of the package are flexible /pliable which enables the whole package to be deformed or worked by bending, twisted, folded or rolled. Thus the package could be stored rolled in a tube for instance.
12 Contact lenses may now be packaged without the previous package design constraint that the basic lens shape be retained.

It will be recognized by persons skilled in the art that numerous variations and modification may be made to the invention as broadly described herein without departing from the overall scope of the invention which is defined by the appended claims.

## Claims

1. A disposable contact lens package (14) comprising:
a first flexible layer (15);
a second flexible layer (16);
a contact lens (22) sealed between said first layer (15) and said second layer (16); the layers (15, 16) being sealed to define a space in which the contact lens (22) is held;
a storage solution (23) sealed between said first flexible layer (15) and said second wherein both said first (15) and second (16) layers are substantially flat or planar; flexible layer (16), wherein said storage solution (23) contacts said contact lens (22);
**characterized in that** said contact lens (22) is a newly manufactured soft lens (22); and
wherein said package (14) containing said contact lens (22) is a retort package (14) configured to be autoclaved.

2. The package (14) of claim 1, wherein at least one of said layers (15, 16) is multi-layer laminate.

3. The package (14) of claim 2, wherein at least one of the layers (15, 16) comprises aluminum.

4. The package (14) of claim 2, wherein the multi-layer laminate comprises one or more materials selected from the group consisting of polyethylene terepthelate, polypropylene, and aluminum.

5. The package (14) of claim 1, wherein said storage solution (23) is a hydration medium (23).

6. The package (14) of claim 1, wherein the entire package (14), when sealed, is flexible which enables the package to be deformed.

7. The package (14) of claim 1, wherein said first (15) and second (16) flexible layers are peelably separated to release said lens (22).

8. The package (14) of claim 1, further comprising a second package (30, 31, 32) as defined in claim 1;
wherein said package (14) and said second package (30, 31, 32) are connected via a frangible connection (33,34).

9. The package (14) of claim 1, wherein said first (15) and second (16) layers comprise a single sheet of flexible material folded to provide a space in which the lens is held.

10. A method of producing a disposable contact lens package according to any of claims 1-7, the disposable contact lens package being formed by folding a single piece of material over itself to provide said first (15) and second (16) flexible layers.

11. A method of producing a disposable contact lens package according to any of claims 1-7, the disposable contact lens package being formed by heat sealing two opposing pieces of flexible material along their edges.

12. A disposable contact lens package according to any of claims 1-7, comprising an absence of air in the package.

13. A disposable contact lens package according to any of claims 1-7, wherein the lens is free to move inside the space defined by the opposing inner surfaces and edges of the space.

## Patentansprüche

1. Einweg-Kontaktlinsenpackung (14), die Folgendes umfasst:
eine erste biegsame Schicht (15);
eine zweite biegsame Schicht (16);
eine Kontaktlinse (22), die zwischen der ersten Schicht (15) und der zweiten Schicht (16) versiegelt ist, wobei die Schichten (15, 16) versiegelt sind, um einen Raum zu definieren, in dem die Kontaktlinse (22) aufgenommen wird;
eine Aufbewahrungslösung (23), die zwischen der ersten biegsamen Schicht (15) und der zweiten biegsamen Schicht (16) versiegelt ist, wobei die Aufbewahrungslösung (23) die Kontaktlinse (22) berührt, wobei sowohl die erste (15) als auch die zweite (16) Schicht im Wesentlichen flach oder eben sind;
**dadurch gekennzeichnet, dass** es sich bei der Kontaktlinse (22) um eine neu hergestellte weiche Linse (22) handelt; und
wobei es sich bei der die Kontaktlinse (22) enthaltenden Packung (14) um eine Retortenpackung (14) handelt, die dazu ausgebildet ist, autoklaviert zu werden.

2. Packung (14) nach Anspruch 1, wobei es sich bei mindestens einer der Schichten (15, 16) um mehrschichtiges Laminat handelt.

3. Packung (14) nach Anspruch 2, wobei mindestens eine der Schichten (15, 16) Aluminium umfasst.

4. Packung (14) nach Anspruch 2, wobei das mehrschichtige Laminat ein oder mehr Materialien umfasst, die aus der aus Polyethylenterephthalat, Polypropylen und Aluminium bestehenden Gruppe ausgewählt werden.

5. Packung (14) nach Anspruch 1, wobei es sich bei der Aufbewahrungslösung (23) um ein Hydrationsmedium (23) handelt.

6. Packung (14) nach Anspruch 1, wobei die gesamte Packung (14), wenn sie versiegelt ist, biegsam ist, was zulässt, dass die Packung verformt wird.

7. Packung (14) nach Anspruch 1, wobei die erste (15) und die zweite (16) biegsame Schicht schälbar getrennt werden, um die Linse (22) freizugeben.

8. Packung (14) nach Anspruch 1, weiter umfassend eine zweite Packung (30, 31, 32) nach Anspruch 1, wobei die Packung (14) und die zweite Packung (30, 31, 32) über eine brüchige Verbindung (33, 34) verbunden sind.

9. Packung (14) nach Anspruch 1, wobei die erste (15) und die zweite Schicht (16) einen einzigen Bogen aus biegsamem Material umfassen, der gefaltet ist, um einen Raum vorzusehen, indem die Linse aufgenommen wird.

10. Verfahren zum Herstellen einer Einweg-Kontaktlinsenpackung nach einem der Ansprüche 1-7, wobei die Einweg-Kontaktlinsenpackung gebildet wird, indem ein einziges Stück Material umgeklappt wird, um die erste (15) und die zweie (16) biegsame Schicht zu bilden.

11. Verfahren zum Herstellen einer Einweg-Kontaktlinsenpackung nach einem der Ansprüche 1-7, wobei die Einweg-Kontaktlinsenpackung gebildet wird, indem zwei gegenüberliegende Stücke aus flexiblem Material entlang ihren Rändern heißgesiegelt werden.

12. Einweg-Kontaktlinsenpackung nach einem der Ansprüche 1-7, umfassend ein Fehlen von Luft in der Packung.

13. Einweg-Kontaktlinsenpackung nach einem der Ansprüche 1-7, wobei sich die Linse ungehindert in dem von den gegenüberliegenden Innenflächen und Rändern des Raums definierten Raum bewegen kann.

## Revendications

1. Conditionnement pour lentille de contact jetable (14) comprenant :
une première couche souple (15) ;
une seconde couche souple (16) ;
une lentille de contact (22) scellée entre ladite première couche (15) et ladite seconde couche (16) ; les couches (15, 16) étant scellées pour définir un espace dans lequel la lentille de contact (22) est contenue ;
une solution de stockage (23) scellée entre ladite première couche souple (15) et ladite seconde couche souple (16), ladite solution de stockage (23) étant en contact avec ladite lentille de contact (22) ; dans lequel les deux dites première (15) et seconde (16) couches sont sensiblement plates ou planes.
**caractérisé en ce que** ladite lentille de contact (22) est une lentille souple (22) nouvellement fabriquée ; et
dans lequel ledit conditionnement (14) contenant ladite lentille de contact (22) est un conditionnement stérilisable en autoclave (14) configuré pour être autoclavé.

2. Conditionnement (14) selon la revendication 1, dans lequel au moins l'une desdites couches (15, 16) est une stratifié multicouches.

3. Conditionnement (14) selon la revendication 2, dans lequel au moins l'une desdites couches (15, 16) comprend de l'aluminium.

4. Conditionnement (14) selon la revendication 2, dans lequel le stratifié multicouches comprend un ou plusieurs matériaux sélectionnés dans le groupe consistant de polytéréphtalate d'éthylène, polypropylène et aluminium.

5. Conditionnement (14) selon la revendication 1, dans lequel ladite solution de stockage (23) est un milieu d'hydratation (23).

6. Conditionnement (14) selon la revendication 1, dans lequel la totalité du conditionnement (14), une fois scellé, est souple pour permettre la déformation du conditionnement.

7. Conditionnement (14) selon la revendication 1, dans lequel lesdites premières (15) et seconde (16) couches souples sont séparées par pelage pour libérer la lentille (22).

8. Conditionnement (14) selon la revendication 1, comprenant en outre un second conditionnement (30, 31, 32) selon la revendication 1 ;
dans lequel ledit conditionnement (14) et ledit second conditionnement (30, 31, 32) sont raccordés par un raccord frangible (33, 34).

9. Conditionnement (14) selon la revendication 1, dans les première (15) et seconde (16) couches comprennent une feuille unique d'un matériau souple plié pour aménager un espace dans lequel est contenue la lentille.

10. Procédé de production d'un conditionnement pour lentille de contact jetable selon l'une quelconque des revendications 1 à 7, le conditionnement pour lentille de contact jetable étant formé en pliant un même morceau de matériau sur lui-même pour fournir lesdites première (15) et seconde (16) couches souples.

11. Procédé de production d'un conditionnement pour lentille de contact jetable selon l'une quelconque des revendications 1 à 7, le conditionnement pour lentille de contact jetable étant formé en thermoscellant deux morceaux opposés de matériau souple le long de leurs bords.

12. Conditionnement pour lentille de contact jetable selon l'une quelconque des revendications 1 à 7, comprenant une absence d'air dans le conditionnement.

13. Conditionnement pour lentille de contact jetable selon l'une quelconque des revendications 1 à 7, dans lequel la lentille est libre de se déplacer à l'intérieur de l'espace défini par les surfaces internes et bords opposés de l'espace.
